# EUROPEAN PATENT APPLICATION

(11) **EP 0 601 877 A1**
(43) Date of publication of application: **15.06.1994**
(21) Application number: 93309981.4
(22) Date of filing: 10.12.1993
(51) Int. Cl.: C04B 14/20, C08K 3/34, C08K 7/26

(54) **Coated substrates and laminate structures comprising organic solvent-based dispersions of organocation-modified vermiculite**

(30) Priority: 11.12.1992 US 989262
(71) Applicant: W.R. Grace & Co.-Conn., New York, New York 10036 (US)
(72) Inventor: Ou, Chia Chih, Lexington, Massachusetts 02173 (US); Bablouzian, Leon, Framingham, Massachusetts 01701 (US)
(74) Representative: Bentham, Stephen

(57) **Abstract**

Coated substrates, and laminate structures made with intermediate layers provided by organic solvent-based dispersions of organocation-modified delaminated vermiculite are disclosed. The laminates display better peel strength compared to laminates made from water-based dispersions, and can be used in a number of applications.

## Description

This invention relates to vermiculite dispersions. In particular, the invention relates to organic solvent-based dispersions of organocation-modified delaminated vermiculite lamellae which comprise an organic solvent-soluble adhesive binder dissolved in the organic solvent, and particularly to the use of such dispersions for making coated substrates or laminate structures.

Aqueous or water based compositions containing inorganic layer minerals have been used to good advantage in end-use applications such as fire resistant coatings, papers, fluid-seal gaskets, gas barriers, and electrical insulation. In particular, coatings formed of delaminated vermiculite have found wide application as fire-resistant coatings or in laminate structures.

The term "vermiculite", as used herein, refers to the group of rock forming mineral species characterized by a layer latticed structure in which the silicate layer units have a thickness of approximately 10 Å. The main elements present in the layer are magnesium, aluminum, iron, silica and oxygen, with the layers being separated by 1 or 2 sheets of water molecules associated with cations such as magnesium, calcium, and sodium. The layers have considerable lateral extent relative to the thickness of the basic 10 Å unit layer. The term vermiculite as used herein therefore includes minerals consisting wholly or largely of vermiculite, or minerals of a mixed-layer type containing vermiculite layers as an important constituent, such as hydrobiotites, and chlorite-vermiculite, but does not include minerals of the montmorillonite group.

Vermiculite articles such as films, coatings, membranes, coated substrates, laminates, and the like may be prepared from vermiculite dispersions by a variety of methods. Vermiculite dispersions, and methods of their use as films, coatings, etc., are described, e.g., in U. S. Patent Nos. 3,325,340, 4,655,842 and 4,780,147. The vermiculite dispersions taught in those patents utilize a water carrier, however, and are disadvantageous for applications where it is desirable that the solvent be removed quickly after application of the dispersion, e.g., after coating a film of the dispersion on a substrate. An organic solvent-based dispersion would appear to fit this need, but the inventors have found such known dispersions, e.g., as taught in U. S. Patent No. 3,356,611, the disclosure of which is incorporated herein by reference, to be inadequate for some applications, such as fire-resistant coatings requiring a strong adherence to the substrate to be protected; and, in the preparation of coated substrates and laminate structures (i.e., a unitary structure comprising at least two layers of substrate materials and a layer (in this case, of vermiculite) disposed therebetween).

For purposes of obtaining the desired properties of vermiculite as a coating on a substrate, it is generally acknowledged that the more the vermiculite present in the coating, the better. However, one drawback of the water based dispersions is that at higher concentrations of vermiculite in the dispersion, coatings made from the dispersions display an easy flaking off of the coating, or a lack of abrasion resistance. This problem may result from poor adhesion of the vermiculite to the substrate (a lack of "adhesive strength"), from poor cohesion of the vermiculite lamellae to each other (a lack of "cohesive strength"), or from both of the aforementioned. The term "lateral strength" is used herein to refer to this adhesive/cohesive property of the vermiculite coating. A related problem exists when coatings made from such dispersions are used as intermediate layers in laminate structures; here the lateral strength problem manifests itself as a decreased laminate peel strength, i.e., the over- and underlying substrate layers separate from each other under relatively low stress. Thus, an improvement in the quality of such dispersions has long been desired, and it is an object of the invention to provide new vermiculite dispersions which can be used in a variety of applications, and are particularly useful in forming films and coated substrates having improved lateral strength, and laminate structures having improved peel strength.

The present invention relates to a vermiculite dispersion comprising organocation-modified, delaminated vermiculite lamellae; an organic solvent; and an organic solvent-soluble adhesive binder dissolved in the organic solvent.

The invention further relates to a process for making a vermiculite dispersion comprising the steps of providing organocation-modified delaminated vermiculite lamellae; and forming a dispersion of said vermiculite lamellae in an organic solvent having dissolved therein an organic solvent-soluble adhesive binder.

The invention also relates to a coated substrate comprising a substrate layer; and a coating layer on the substrate layer, the coating layer comprising organocation-modified delaminated vermiculite lamellae and an organic solvent-soluble adhesive binder. In another embodiment of the invention the coated substrate further comprises a second substrate layer laminated to the coating layer to form a laminate structure. In yet another embodiment of the invention the coated substrate further comprises a second coating layer on the second substrate layer, and a third substrate layer laminated to the second coating layer.

The invention further relates to a method of making a coated substrate comprising the steps of providing a substrate layer; depositing onto the substrate a dispersion comprising organocation-modified delaminated vermiculite lamellae, organic solvent, and an adhesive binder dissolved in the organic solvent, to form a coating thereon. In another embodiment of the invention a second substrate layer is laminated to the coating layer, to form a laminate structure. In yet another embodiment of the invention a second coating layer is coated on the second substrate layer is laminated to the coating layer, and a third substrate layer is laminated to the second coating layer.

The present invention is directed to organic solvent-based vermiculite dispersions which can be used in forming coatings, and laminate structures having high peel strength. In particular, the invention is directed to compositions comprising a dispersion of organocation-modified delaminated vermiculite in organic solvent having dissolved in it an adhesive binder, and particularly to the use of such dispersions for making coated substrates or laminate structures.

The preparation of aqueous vermiculite dispersions, i.e., suspensions of delaminated vermiculite lamellae in water, generally involves the initial process of treating crystals of vermiculite with a cationic swelling agent which promotes swelling of the crystals in a direction normal to the main cleavage plane of the crystals during immersion in water, immersing the treated crystals in water so that they swell, and shearing the swollen crystals in the water to form an aqueous dispersion of delaminated vermiculite "lamellae" or "platelets". Thus, as used herein, the term "delaminated vermiculite lamellae" refers to such lamellae prepared according to the above-mentioned process. Various swelling agents may be used, such as alkylammonium cations having between 3 and 6 carbon atoms inclusive in each alkyl group, e.g., methyl-butylammonium, n-butylammonium, isoamylammonium, iso-butylammonium, and n-propylammonium; the cationic form of amino acids, such as lysine or ornithine; or lithium cation. Preferably, delaminated vermiculite lamellae are produced using lithium cation as the swelling agent. A particularly suitable delaminated vermiculite of this type is disclosed in U. S. Patent No. 4,655,842, the disclosure of which is incorporated herein by reference, and is available under the trademark MICROLITE® from W. R. Grace & Co.-Conn.

According to this invention, vermiculite lamellae are modified by subjecting them to cation exchange with organocations. The term "organocation-modified vermiculite" thus refers to vermiculite lamellae in which the cation(s) associated with the lamellae have been at least partially removed and replaced with the desired organocation(s). This cation exchange converts the lamellae to a form which is dispersible in one or more organic solvents, and, accordingly, the amount of such organocations exchanged into the vermiculite should be sufficient to enable formation of a dispersion of the vermiculite in the chosen organic solvent, and more preferably, formation of a colloidal dispersion of the vermiculite. It is believed that the displacement of these associated cations with the organocations of the invention imparts some hydrophobic character to the lamellae, thus converting them to a form which is dispersible in organic solvent.

Suitable organocations are primary, secondary, tertiary or quaternary alkyl ammonium compounds having straight or branched, substituted or unsubstituted aliphatic chains; or primary, secondary, tertiary or quaternary aryl ammonium compounds. Preferably at least one aliphatic chain contains three or more carbon atoms. Organocations according to the invention that contain sulfonium and phosphonium cationic groups may also be used. In more preferred organocations at least one alkyl or aryl group contains at least 6 carbon atoms. Particularly preferred organocations are dodecylammonium, octadecylammonium, n-methylhexylammonium, dioctylammonium, diphenylammonium, dimethyloctylammonium, hexyltrimethylammonium, octylphenoxyethoxyethyldimethylammonium, cetyltrimethylammonium, hexadecylpyridinium, and octadecyltrimethylammonium. Although organocation halide salts are generally used, the invention is not limited to such salts.

In a preferred embodiment, modification of the delaminated vermiculite lamellae is accomplished by carrying out the organocation exchange on the delaminated vermiculite lamellae in the aqueous dispersion prepared as described above. The vermiculite content of the dispersion is generally from about 0.1 to 60%, by weight of vermiculite solids, based on the total dispersion weight, preferably from about 2 to 30%, and most preferably from about 5 to 15%. The organocation is added to the water-based dispersion in an amount of at least 10 milliequivalents/100g of vermiculite; preferably, from 50 to 200 milliequivalents/100g of vermiculite are used. The mixture is gently agitated to allow penetration of the organocation-containing solution into the delaminated vermiculite lamellae. The treatment time may vary, from one hour to several days, depending on, e.g., temperature, lamellae size, etc. The organocation-treated vermiculite lamellae are then isolated through filtering, washed with water to remove residual amounts of organocation, and dried.

It should be noted that the two-step process described above, i.e., a swelling agent treatment/swelling/delamination step followed by an organocation exchange step, is only one preferred method of obtaining the organocation-modified delaminated vermiculite lamellae of the invention. A "one-step" process, using an organocation of the invention which performs two functions, i.e., it 1) promotes swelling of the vermiculite ore for the purpose of forming the aqueous dispersion, and 2) displaces a sufficient proportion of cations from the vermiculite lamellae to render them dispersible in organic solvent, is within the scope of the invention. The modified lamellae are then isolated by filtering, washing, and drying, as described above in relation to the two-step process. Examples of "two-function" organocations are methylbutylammonium, n-butylammonium, and isoamylammonium, preferably n-butylammonium, as described in the aforementioned U. S. Patent 3,356,611. It should be noted that the use of lower molecular weight organocations results in good dispersibility in more polar solvents, e.g., methanol, but poorer dispersibility in less polar solvents like toluene. Therefore, the selection of a solvent for making the dispersion will be depend somewhat on the organic character of the chosen organocation.

A dispersion, preferably a colloidal dispersion, of the organocation-modified vermiculite lamellae in an organic solvent is then prepared by placing the lamellae in the organic solvent and providing sufficient agitation to disperse the lamellae. A preferred practice involves grinding and sizing the lamellae below a certain size, i.e., <200µ, then adding the lamellae to organic solvent and subjecting the mixture to shearing forces sufficient to form a dispersion. This practice beneficially provides a colloidal dispersion of the vermiculite lamellae. The formation of colloidal dispersions is preferred because vermiculite films and coatings, etc., formed from such dispersions exhibit better lateral strength, compared to noncolloidal dispersions and flocs. The term "colloidal dispersion", as used herein, is meant to refer to a solid-in-liquid system comprising a suspension of finely divided particles having any one dimension of less than 1µ. A highly anisotropic, well dispersed colloidal system will show birefringence, and this species of colloidal dispersion is particularly preferred. Birefringence is an optical phenomenon caused by the double refraction of light due to an anisotropic arrangement of particles having any one dimension less than the wavelength of light.

The inventors have unexpectedly found that vermiculite dispersions of the invention are surprisingly less susceptible to flocculation than comparable water-based systems. "Flocculation", as used herein, means the gathering or aggregation of small masses, usually in a liquid medium, into larger masses called flocs. (Encyclopedia of Polymer Science and Engineering, 2^{nd} Ed., Volume 7, 1987, Wiley & Sons.) The resistance to flocculation of dispersions of the invention is very beneficial because this gives the user greater flexibility in formulating dispersions containing other beneficial additives, e.g., colorants, fillers, and flame retardants, in greater proportions heretofore unattainable. Also, the resistance to flocculation enables the formation of strong, self-supporting films or coatings having good lateral strength. The well-dispersed colloidal systems enhance the parallel orientation of vermiculite lamellae in the films and coatings, resulting in an increased degree of overlap and attraction between the individual lamellae. In turn, this provides strong, self-supporting films and coatings having improved lateral strength.

The term "adhesive binder" refers to a material capable of holding materials together by means of surface attachment. The adhesive binders used herein are soluble in the organic solvent of choice for the dispersion. Examples of such binders include thermosets such as epoxies, modified epoxies, EPDM copolymers, silicone rubbers such as RTV silicones, fluorosilicone rubbers, nitrile rubbers, butyl rubbers, polyurethane, and mixtures thereof; thermoplastics such as hot melt adhesives (e.g., styreneisoprene copolymers and ethylene-vinyl acetate copolymers), acrylonitrilebutadiene-styrene ("ABS"), acetals, acrylics, cellulosics, and chlorinated polyethers; pressure sensitive, crosslinkable and non-crosslinkable adhesives; and multi component binders including catalysts and/or cross linking agents. Preferably, at least 85% of the binder added to the organic solvent should dissolved.

It is generally preferable that before making the dispersion the adhesive binder of the invention is already dissolved in the organic solvent. However, the dispersion can alternately be prepared first and the adhesive binder thereafter dissolved in the solvent. The amount of the binder in the organic solvent will be determined by a number of factors, such as the particular binder(s) and solvent(s) used; the desired concentration of the binder in the dispersion; and the solubility of the particular binder in the particular solvent. However, a binder concentration of at least 0.01% by weight, based on the total weight of the dispersion, is generally preferred, with a range of about 0.1 to 30% preferred, a range of about 0.1 to 20% particularly preferred, and even more preferably from about 0.1 to 10%.

The ratio of vermiculite to adhesive binder in the dispersion will depend on the specific application. A weight ratio of vermiculite:adhesive binder in the range of about 1:25 to 1:0.01 is preferred, with a more preferred range of about 1:10 to 1:0.5, and an especially preferred range of 1:2.5 to 1:0.5.

The percentage of organocation-modified vermiculite in the dispersion can vary from about 1 to 80%, based on the total weight of the dispersion. Preferably the concentration is about 1 to 60%, more preferably about 5 to 50%, and even more preferably about 5 to 30%. Other additives, such as rheological control agents like thickeners, or material processing aids like defoamers, can also be added to the dispersion, as long as the addition of such does not interfere with the advantageous properties of the dispersion.

The organic solvent functions as a carrier for the organocation-modified vermiculite lamellae described herein and as a solvent for the adhesive binder component. The organic solvent can be aromatic or aliphatic, polar or non-polar. Mixtures of such solvents may be used. Preferred solvents include chloroform, nitrobenzene, octanol, methanol, benzaldehyde, methyl ethyl ketone, dimethylacetarnide, ethyl acetate, tetrahydrofuran, toluene, xylene, and mixtures thereof. Examples of advantageous mixtures of the above solvents are methanol/toluene or ethyl acetate/xylene.

It is well-known that a better quality vermiculite dispersion makes a better coating composition. The present invention can provide an excellent colloidal dispersion of organocation-modified delaminated vermiculite lamellae in the binder and organic solvent. The organic solvent facilitates the intimate intermixing of the binder in and around the individual vermiculite lamellae, and is superior to water in this respect. This is believed to significantly increase the affinity of the vermiculite lamellae to most substrates (particularly organic polymeric substrates such as polyethylene and polyethylene-based materials) and improves the bonding forces between the vermiculite lamellae. This, combined with the aforementioned tendency to resist the formation of flocs, is believed to result in a coating having good lateral strength, and, when used in making a laminate structure, such a laminate structure having superior peel strength. It should be stated, however, that this theory is not meant to limit the invention, nor provide a definitive mechanistic explanation.

An advantage of the invention is that higher vermiculite concentrations can be used when the dispersions are used as intermediate layers in laminate structures, while obtaining an adequate peel strength of the laminate structure. The "peel strength" is a measure of the effectiveness of adhesive bonding between adjacent surfaces, and determines the integrity of laminate structures. Peel strength can be measured by such common means as INSTRON materials testing apparatus, and generally in accordance with ASTM D 1876-72. When the concentration of the inorganic layer mineral in a coating is increased, it is known that the overall lateral strength of the coating decreases. The coating compositions described herein, however, allow concentrations of inorganic layer minerals, particularly delaminated vermiculite, to be increased to levels sufficient to impart the desired properties and also maintain an adequate laminate peel strength, i.e., sufficient to prevent the layers from peeling apart upon normal use.

The dispersions of the invention may be applied to substrates by any convenient method, such as brushing, spraying, immersion, dip-coating, roller coating, spreading, doctoring, and impregnation. A wide variety of substrate materials may be used, e.g., porous, permeable, and non-porous substrates which can be flexible or rigid. Exemplary substrates include metals such as steel or aluminum; wood, organic polymers and plastics such as polyesters, and polyethylene and polyethylene-based materials like polyethylene terephthalate; woven and non-woven articles; particle board; fabrics; vermiculite film and oriented strand board. The substrate may be in the form of a plate, sheet, or foil. If desired, the surface of the substrate may be pre-treated, e.g., by abrading a smooth surface, to improve adhesion; however, this is generally not necessary. The coatings are formed by applying a suspension of lamellae to the substrate; and, preferably, removing the solvent. Because the organic solvent can be chosen to be easily and quickly evaporated in this manner, the coated substrate is ready for further processing in relatively short order. Self-supporting films may be prepared by coating the dispersion on a substrate, evaporating the solvent, and separating the dried vermiculite layer from the substrate. When preparing a laminate, the quick removal of the solvent allows lamination of the next layer to proceed almost uninterrupted.

The use of additional adhesive is not necessary during a lamination procedure and a high peel strength laminate structure can be made by laminating the next layer directly to the vermiculite coating or film that has been applied to the substrate. The omission of applying a separate laminating adhesive significantly reduces the manufacturing cost of the composite. If desired, however, known laminating adhesives can be used. Depending on the particular adhesive binder used in the vermiculite dispersion, e.g., hot-melt adhesive binders, pressure and/or heat may be required to finish the lamination. We have found, for instance, that a laminate structure, employing dispersions of the invention as an intermediate layer between polymeric substrate layers, is advantageously easy to make and can be made into a film form which can be put to any use apparent to one of ordinary skill in the art. Such laminate structures are made by providing a substrate layer; and coating a dispersion of the invention comprising a hot-melt adhesive as the adhesive binder onto the substrate. Preferably, the solvent is then evaporated or removed, to provide a vermiculite and adhesive binder-rich layer; a second substrate layer which may be the same as or different from the first is laid onto the vermiculite and adhesive binder-rich layer; and heat and pressure are applied to the laminate sufficient to liquefy the adhesive and cause the laminate components to adhere to each other. It can also be seen that multiple-layer laminate structures may also be made according to the invention, e.g., by providing additional alternating coating and substrate layers as described herein.

The following examples are given for illustrative purposes only and are not meant to be a limitation on the claims appended hereto. All parts are by weight unless otherwise indicated.

### EXAMPLE 1

The efficacy of water-based vermiculite dispersions of the current art comprising a latex binder were evaluated as follows. Three coating solutions were prepared, by mixing together a synthetic resin dispersion based on an ethylene-vinyl acetate copolymer (52% solids)(VINNAPAS-Dispersion EN-428, Wacker Chemicals (USA)), MICROLITE® 963 (7.5% solids) water based vermiculite dispersion (W. R. Grace & Co.-Conn.), and deionized water in the amounts shown in Table I. One drop of TERGITOL TMN-6 (Union Carbide) surfactant was added per coating composition.

**Table I**

| **Sample** **No.** | **MICROLITE**® **963** **(g)** | **EN-428** **(g)** | **DI** **Water** **(g)** | **Total** **(g)** |
|---|---|---|---|---|
| 1 | 16.0 | 9.2 | 24.8 | 50.0 |
| 2 | 32.0 | 6.9 | 11.1 | 50.0 |
| 3 | 40.0 | 5.3 | 4.8 | 50.1 |

Sample 1 showed some signs of vermiculite particle association, indicating the vermiculite was no longer well dispersed. Samples 2 and 3 appeared to be well-dispersed.

Samples 1, 2 and 3 were used to prepare coated substrates. A 20 mil wet coating of each sample was applied to individual 4 x 6'' sheets of 1 mil thick polyester (PET) film (TERPHANE™, Rhone-Poulenc) using a hand draw down gauge; the coatings were allowed to dry under ambient conditions. A small amount of a nonionic surfactant was added to the dispersions before coating, to aid in wetting. Once the coating was nearly dry, a laminate structure was made, wherein a second layer of 1 mil thick polyester film was carefully applied in a manner so as not to entrain air bubbles. Each laminate structure was allowed to dry overnight under ambient conditions, and then pressed at 20,000 pounds for 30 seconds using a Carver press. Peel strength evaluation was done generally according to ASIM D-1876 at 2 in/min crosshead speed on an INSTRON Model 1000. The measured peel strength values are shown in Table II.

**Table II**

| **Laminate** **structure** **made** **with** **Sample** **No.** | **%** **Vermiculite** **of** **Total** **Solids** | **Peel** **Strength** **(g/in)** |
|---|---|---|
| 1 | 20 | < 20 |
| 2 | 40 | < 20 |
| 3 | 50 | < 20 |

### EXAMPLE 2

An experiment was done to demonstrate the utility of dispersions of the invention in making coated substrates and laminate structures. Dispersions of organocation-modified vermiculite lamellae according to the invention were made as follows. In a 200ml round bottom flask, 21.9g of cetyltrimethylammonium bromide (Aldrich Chemical Co., Milwaukee, Wisconsin) was added to 500ml deionized water and stirred with a Caframo mixer until dissolved. 50g of delaminated vermiculite lamellae in powder form (MICROLITE® Powder, W. R. Grace and Co.-Conn.) and an additional 500ml deionized water were then added to yield a cation concentration of 120 milliequivalents/100 gram vermiculite. The mixture was heated to 80°C and stirred with a Caframo mixer for two hours. After cooling, the mixture was filtered to remove the liquid and the organocation-modified vermiculite was washed with two 500ml aliquots of a 1:1 mixture of reagent alcohol (Fisher Scientific Cat. No. A962-4) and deionized water, followed by four 500ml aliquots of deionized water. The organocation-modified vermiculite was then dried overnight at 110°C in an forced air oven. After drying, the organocation-modified vermiculite was ground and dry screened to <106µ. The aforementioned grinding to <106µ is preferred and allows one to easily re-disperse the vermiculite to form a colloidal dispersion.

*p*-xylene (Aldrich Chemical Co., Milwaukee, Wisconsin) was added to 20 grams of a styrene-isoprene copolymer adhesive binder ("HM-1597", H.B. Fuller, St. Paul, Minnesota) to make up a 100g mixture. The mixture was stirred on a magnetic stir plate over low heat until the binder was dissolved, resulting in a 20% by weight solution of the adhesive binder, based on the total weight of solution.

An organic vermiculite dispersion coating composition was prepared as follows. In a Waring blender, 6g of the organocation-modified vermiculite prepared above was added to 94g of *p*-xylene and sheared for 5 minutes; it was noted that a gel was formed. 20g of this vermiculite-containing gel was then mixed with 17.8g of the binder solution prepared above; the additional solvent converted the gel to a dispersion, and birefringence was clearly observed, indicating a well dispersed colloidal system. The total solids of this composition (defined as ((wt. vermiculite + wt. binder)/(wt. solution)) x 100) was thus 12.6%, with vermiculite as 25% of the total solids. This dispersion was designated "D-1".

Three more dispersions were also prepared, all according to the above procedure. In the first, "D-2", the adhesive binder used was "HM-2016", an ethylene-vinyl acetate copolymer-based adhesive binder also available from H.B. Fuller. The other two dispersions, "D-2" and "D-3", were prepared like D-1 and D-2, but toluene was substituted for the *p*-xylene as the organic solvent. As with dispersion D-1, these dispersions all displayed birefringence, and the vermiculite was observed to be very well dispersed. Streaming birefringence was observed upon mixing the dispersions after a period of at least four weeks after preparation.

To demonstrate the utility of the aforementioned types of coating compositions, the organic vermiculite dispersion coating composition "D-1" was selected for preparing a coated substrate, and thereafter, a laminate according to the procedure and materials detailed in Example 1, except that a 5 mil wet coating was applied to the PET film, and the PET/vermiculite/PET laminate was hot pressed at 160 °F and 20,000 lb. in the Carver press for 30 seconds. The ratio of vermiculite:binder in the coating was 1:3. A maximum peel strength of 114 g/in was measured.

### EXAMPLE 3

To determine the effect on peel strength of the content of organocation-modified vermiculite in a laminate, laminates with increasing amounts of vermiculite were prepared as in Example 2, by varying the amount of binder solution added to the vermiculite gel; the total solids content was maintained at 12.6%. The results are summarized in Table III, which show that although the peel strength generally decreases as the amount of vermiculite in the laminate increases, higher amounts of vermiculite may be incorporated into the laminate while still obtaining acceptable peel strengths.

**Table III**

| **Vermiculite:Binder** | **Peel** **Strength** **(g/in)** |
|---|---|
| 1:9 | 400 |
| 1:3 | 114 |
| 1:2.3 | 145 |
| 1:1.5 | 159 |
| 1:1 | 23 |
| 1:0.66 | <20 |

## Claims

1. A coated substrate comprising
a) a substrate layer; and
b) a coating layer on the substrate, the coating layer comprising organocation-modified delaminated vermiculite lamellae and an organic solvent-soluble adhesive binder.

2. A coated substrate according to claim 1 wherein the delaminated organocation-modified vermiculite lamellae and the organic solvent-soluble adhesive binder are in a weight ratio of from 1:25 to 1:0.01.

3. A coated substrate according to claim 1 or 2 wherein the delaminated organocation-modified vermiculite lamellae and the organic solvent-soluble adhesive binder are in a weight ratio of from 1:2.5 to 1:0.5.

4. A coated substrate according to any one of the preceding claims wherein the said organic solvent-soluble adhesive binder is an epoxy; modified epoxy; EPDM copolymer; silicone rubber; fluorosilicone rubber; nitrile rubber; butyl rubber; polyurethane; or a mixture thereof.

5. A coated substrate according to any one of claims 1 to 3 wherein the organic solvent-soluble adhesive binder is a hot melt adhesive; acrylonitrile-butadienestyrene; acetal; acrylic; cellulosic; chlorinated polyether; pressure sensitive, crosslinkable or non-crosslinkable adhesive; multi component binder including catalyst and/or crosslinking agent; or a mixture thereof.

6. A coated substrate according to claim 5 wherein the organic solvent-soluble adhesive binder is a hot melt adhesive which is a styrene-isoprene copolymer, ethylenevinyl acetate copolymer; or a mixture thereof.

7. A coated substrate according to any one of the preceding claims wherein the substrate layer is steel, aluminum, wood, a woven or non-woven particle board, organic polymer or plastic, fabric, vermiculite film or oriented strand board.

8. A coated substrate according to any one of the preceding claims wherein the substrate layer is a plate, sheet or foil.

9. A coated substrate according to any one of the preceding claims further comprising a second substrate layer laminated to the coating layer, to form a laminate structure.

10. A coated substrate according to claim 9 further comprising a second coating layer on the second substrate layer, and a third substrate layer laminated to the second coating layer.

11. A method of making a coated substrate according to any one of the preceding claims comprising:
a) providing a substrate layer; and
b) depositing a dispersion comprising organocation-modified delaminated vermiculite lamellae, organic solvent, and an adhesive binder dissolved in the organic solvent, upon the substrate layer, to form a coating layer thereon.

12. A method according to claim 11 wherein the dispersion is a colloidal dispersion.

13. A method according to claim 11 or 12, wherein the amount of organocation-modified vermiculite lamellae in the dispersion is from 1 to 80%, based on the total weight of the dispersion.

14. A method according to any one of claims 11 to 13 wherein the adhesive binder is present in an amount of from 0.1 to 30% by weight, based on the total weight of the dispersion.

15. A method according to any one of claims 11 to 14 wherein the organic solvent is chloroform, nitrobenzene, octanol, methanol, benzaldehyde, methyl ethyl ketone, dimethylacetamide, ethyl acetate, tetrahydrofuran, toluene, xylene, or a mixture thereof.

16. A method according to any one of claims 11 to 15 further comprising evaporating the organic solvent to provide a vermiculite and adhesive binder-rich layer.

17. A method according to any one of claims 11 to 16 further comprising laminating a second substrate layer to the coating layer, to form a laminate structure.

18. A method according to claim 17 further comprising depositing a dispersion comprising organocation-modified delaminated vermiculite lamellae, organic solvent, and an adhesive binder dissolved in the organic solvent, upon the second substrate layer, to form a second coating layer thereon; and laminating a third substrate layer to the second coating layer.
